# EUROPEAN PATENT SPECIFICATION

(11) **EP 3 293 418 B1**
(45) Date of publication and mention of the grant of the patent: **10.06.2020**
(21) Application number: 15881697.5
(22) Date of filing: 17.06.2015
(51) Int. Cl.: F16H 37/12, F16H 33/02, A61H 23/00, H02K 7/16, A61H 23/02

(54) **BACK KNOCKING MECHANISM AND KNOCKING METHOD THEREFOR**
RÜCKWÄRTSKLOPFMECHANISMUS UND KLOPFVERFAHREN DAFÜR
MÉCANISME DE CHOC EN RETOUR ET PROCÉDÉ DE CHOC CORRESPONDANT

(30) Priority: 10.02.2015 CN 201510068411
(43) Date of publication of application: 14.03.2018
(73) Proprietor: Hangzhou Deyu Precision Machinery Manufacturing Co., Ltd., Lin'an, Zhejiang 311300 (CN)
(72) Inventor: WANG, Jingliang, Lin'an Zhejiang 311300 (CN); YANG, Jing, Lin'an Zhejiang 311300 (CN); WANG, Lidan, Lin'an Zhejiang 311300 (CN)
(74) Representative: Proi World Intellectual Property GmbH
(86) International application number: PCT/CN2015/081663
(87) International publication number: WO 2016/127536

(56) References cited:
- CN-A- 104 633 038
- CN-U- 203 576 876
- CN-U- 203 814 978
- CN-U- 204 477 234
- CN-Y- 2 432 931
- CN-Y- 2 432 931
- CN-Y- 201 154 070
- KR-B1- 101 215 900
- US-A- 3 424 149
- US-A- 6 083 181

## Description

### TECHNICAL FIELD

The present disclosure relates to a back knocking device.

### BACKGROUD

In daily lives, it is very common for people to have an ache in the waist and back. Knocking on the back using a fist is an effective method for dredging channels, promoting blood circulation, relaxing muscles, allaying tiredness and relieving the ache in the waist and back. A back knocking mechanism is a mechanical device developed to simulate fist knock on the back. Current back knocking mechanisms mainly include tread driven back knocking mechanisms, pendulum back knocking mechanisms, motor driven crank-rocker mechanisms, motor driven pendulum cam mechanism, etc., and have defects such as large size, poor knocking comfort, and inconvenience in regulation of knocking force.

CN 203814978U discloses a back knocking chair with an Archimedes cam.

### SUMMARY

The present invention relates to a back knocking device according to claim 1. Various embodiments are recited in dependent claims.

In view of the drawbacks in existing technologies, the present disclosure aims to provide a back knocking device. The aim of the present disclosure is realized through the following technical scheme.

A back knocking device includes a stander, a knocking force regulating motor, a knocking force regulating deceleration device, a worm, a main motor, a main motor deceleration device, a small gear, a convex disc, a slide rod, a concave disc, a transitional disc, a large gear, a knocking head, a knocking arm, a turbine, a transmission shaft and a volute spring, wherein the knocking force regulating motor is mounted on the stander, the knocking force regulating motor is connected to one end of the knocking force regulating deceleration device, the other end of the knocking force regulating deceleration device is connected to the worm, the worm is in revolute pair connection with the stander, the worm is engaged with the turbine, the turbine is in revolute pair connection with the transmission shaft, the volute spring has an outer end fixed on the turbine and an inner end fixed on the transmission shaft, the transmission shaft is in revolute pair connection with the stander, the main motor is mounted on the stander, the main motor is connected to one end of the main motor deceleration device, the other end of the main motor deceleration device is connected to the small gear, the small gear is engaged with the large gear, the large gear is in revolute pair connection with the transmission shaft, the convex disc is fixed on the large gear, the transitional disc is fixed on the transmission shaft, the transitional disc is disposed between the convex disc and the concave disc, the slide rod is in sliding pair connection with the transitional disc, the slide rod has one end in higher pair connection with the convex disc and the other end in higher pair connection with the concave disc, the concave disc is in revolute pair connection with the transmission shaft, the concave disc is fixed with the stander, the knocking arm has one end fixed on the transmission shaft and the other end connected to the knocking head.

The convex disc has fixed thereon a plurality of bumps having slopes.

The concave disc has disposed thereon a plurality of grooves having slopes.

A knocking method for the back knocking device is as follows.

The knocking force regulating motor drives the worm to rotate, through the knocking force regulating deceleration device; the worm drives the turbine to rotate; the turbine drives the volute spring to move relative to the transmission shaft, the volute spring being wound up or released depending on the rotating direction of the knocking force regulating motor; the main motor rotates clockwise, and drives the small gear to rotate clockwise through the main motor deceleration device; the small gear drives the large gear and the convex disc to rotate anticlockwise; the bump having slopes on the convex disc is in higher pair contact with a left end of the slide rod, and applies a circumferential force and an axial force to the slide rod; the slide rod rotates anticlockwise about a shaft axis of the transmission shaft under the action of the circumferential force; the slide rod tends to slide rightwards under the action of the axial force, however, a right end of the slide rod directly contacts a disc surface of the concave disc fixed on the stander and thus cannot move rightwards, then the slide rod drives the transitional disc to rotate anticlockwise about the shaft axis of the transmission shaft; the transitional disc drives the transmission shaft to rotate anticlockwise; the transmission shaft rotates anticlockwise to wind up the volute spring to store elastic potential energy; when the slide rod rotates to the position of the groove, the slide rod is forced to move horizontally under the action of the axial force of the bump; when the right end of the slide rod completely slides into the groove, the bump is completely disengaged from the left end of the slide rod, and at this moment, the elastic potential energy in the volute spring is released, driving the transmission shaft to move clockwise and driving the knocking arm to swing, and the knocking arm drives the knocking head to realize an knocking effect; when the transmission shaft moves clockwise, the transmission shaft forces the slide rod to move leftwards; since the convex disc moves anticlockwise continuously when separated from the slide rod, the slide rod has been staggered from the previous bump when moving leftwards and leans against the disc surface of the convex disc; subsequently, driven by the quick clockwise movement of the transmission shaft, the slide rod contacts a next bump, and at this moment, the transmission shaft stops moving clockwise and begins to move with the anticlockwise movement of the convex disc; meanwhile, the volute spring starts a new turn of elastic potential energy storage, and cycles in this manner, so that the knocking head realizes continuous knocking, wherein the swing angle for each swing of the transmission shaft is determined by the angle between the bumps.

The back knocking device in the present disclosure is compact in structure and small in size, is stable to operate, safe and comfortable to use, and is capable of regulating the knocking force.

### BRIEF DESCRIPTION OF THE DRAWINGS

FIG. 1 is a structure diagram of a back knocking device.
FIG. 2 is a perspective view of a convex disc of the present disclosure.
FIG. 3 is a perspective view of a slide rod of the present disclosure.
FIG. 4 is a perspective view of a transitional disc of the present disclosure.
FIG. 5 is a perspective view of a concave disc of the present disclosure.

In the drawings: 1 - stander, 2 - knocking force regulating motor, 3 - knocking force regulating deceleration device, 4 - worm, 5 - main motor, 6 - main motor deceleration device, 7 - small gear, 8 - convex disc, 9 - slide rod, 10 - concave disc, 11 - transitional disc, 12 - large gear, 13 - knocking head, 14 - knocking arm, 15 - turbine, 16 - transmission shaft, 17 - volute spring, 18 - groove, 19 - bump.

### DESCRIPTION OF THE EMBODIMENTS

The present disclosure is described below in detail in conjunction with drawings and specific embodiments.

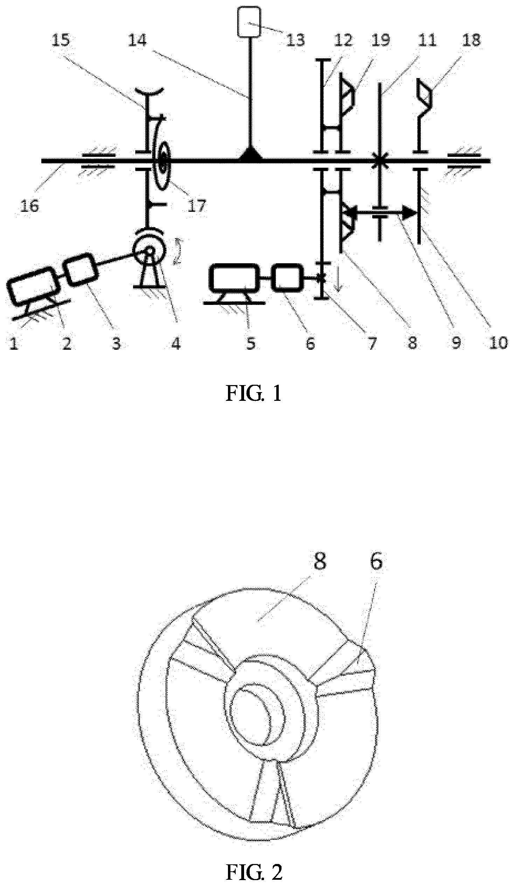

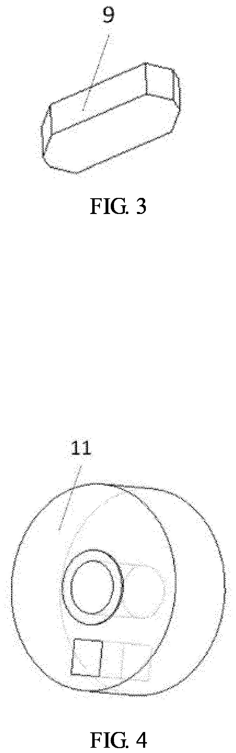

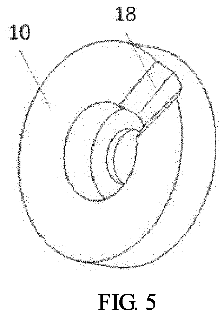

As shown in FIG. 1 to FIG. 5, a back knocking device includes a stander 1, a knocking force regulating motor 2, a knocking force regulating deceleration device 3, a worm 4, a main motor 5, a main motor deceleration device 6, a small gear 7, a convex disc 8, a slide rod 9, a concave disc 10, a transitional disc 11, a large gear 12, a knocking head 13, a knocking arm 14, a turbine 15, a transmission shaft 16 and a volute spring 17. The knocking force regulating motor 2 is mounted on the stander 1, the knocking force regulating motor 2 is connected to one end of the knocking force regulating deceleration device 3, the other end of the knocking force regulating deceleration device 3 is connected to the worm 4, the worm 4 is in revolute pair connection with the stander 1, the worm 4 is engaged with the turbine 15, the turbine 15 is in revolute pair connection with the transmission shaft 16, the volute spring 17 has an outer end fixed on the turbine 15 and an inner end fixed on the transmission shaft 16, the transmission shaft 16 is in revolute pair connection with the stander 1, the main motor 5 is mounted on the stander 1, the main motor 5 is connected to one end of the main motor deceleration device 6, the other end of the main motor deceleration device 6 is connected to the small gear 7, the small gear 7 is engaged with the large gear 12, the large gear 12 is in revolute pair connection with the transmission shaft 16, the convex disc 8 is fixed on the large gear 12, the transitional disc 11 is fixed on the transmission shaft 16, the transitional disc 11 is disposed between the convex disc 8 and the concave disc 10, the slide rod 9 is in sliding pair connection with the transitional disc 11, the slide rod 9 has one end in higher pair connection with the convex disc 8 and the other end in higher pair connection with the concave disc 10, the concave disc 10 is in revolute pair connection with the transmission shaft 16, the concave disc 10 is fixed with the stander 1, the knocking arm 14 has one end fixed on the transmission shaft 16 and the other end connected to the knocking head 13.

The convex disc 8 has fixed thereon three bumps 19 having slopes.

The concave disc 10 has disposed thereon one groove 18 having slopes.

When the back knocking device is in use, the knocking force regulating motor 2 drives the worm 4 to rotate, through the knocking force regulating deceleration device 3; the worm 4 drives the turbine 15 to rotate; the turbine 15 drives the volute spring 17 to move relative to the transmission shaft 16, the volute spring 17 being wound up or released depending on the rotating direction of the knocking force regulating motor 2; the main motor 5 rotates clockwise, and drives the small gear 7 to rotate clockwise through the main motor deceleration device 6; the small gear 7 drives the large gear 12 and the convex disc 8 to rotate anticlockwise; the bump 19 having slopes on the convex disc 8 is in higher pair contact with a left end of the slide rod 9, and applies a circumferential force and an axial force to the slide rod 9; the slide rod 9 rotates anticlockwise about a shaft axis of the transmission shaft 16 under the action of the circumferential force; the slide rod 9 tends to slide rightwards under the action of the axial force, however, a right end of the slide rod 9 directly contacts a disc surface of the concave disc fixed on the stander 1 and thus cannot move rightwards, then the slide rod 9 drives the transitional disc 11 to rotate anticlockwise about the shaft axis of the transmission shaft 16; the transitional disc 11 drives the transmission shaft 16 to rotate anticlockwise; the transmission shaft 16 rotates anticlockwise to wind up the volute spring 17 to store elastic potential energy; when the slide rod 9 rotates to the position of the groove 18, the slide rod 9 is forced to move horizontally under the action of the axial force of the bump 19; when the right end of the slide rod 9 completely slides into the groove 18, the bump 19 is completely disengaged from the left end of the slide rod 9, and at this moment, the elastic potential energy in the volute spring 17 is released, driving the transmission shaft 16 to move clockwise and driving the knocking arm 14 to swing, and the knocking arm 14 drives the knocking head 13 to realize an knocking effect; when the transmission shaft 16 moves clockwise, the transmission shaft 16 forces the slide rod 9 to move leftwards; since the convex disc 8 moves anticlockwise continuously when separated from the slide rod 9, the slide rod 9 has been staggered from the previous bump 19 when moving leftwards and leans against the disc surface of the convex disc 8; subsequently, driven by the quick clockwise movement of the transmission shaft 16, the slide rod 9 contacts a next bump 19, and at this moment, the transmission shaft 16 stops moving clockwise and begins to move with the anticlockwise movement of the convex disc 8; meanwhile, the volute spring starts a new turn of elastic potential energy storage, and cycles in this manner, so that the knocking head 13 realizes continuous knocking, wherein the swing angle for each swing of the transmission shaft 16 is determined by the angle between the bumps.

## Claims

1. A back knocking device, comprising a stander (1), a knocking force regulating motor (2), a knocking force regulating deceleration device (3), a worm (4), a main motor (5), a main motor deceleration device (6), a small gear (7), a convex disc (8), a slide rod (9), a concave disc (10), a transitional disc (11), a large gear (12), a knocking head (13), a knocking arm (14), a turbine (15), a transmission shaft (16) and a volute spring (17), wherein the knocking force regulating motor (2) is mounted on the stander (1), the knocking force regulating motor (2) is connected to one end of the knocking force regulating deceleration device (3), the other end of the knocking force regulating deceleration device (3) is connected to the worm (4), the worm (4) is in revolute pair connection with the stander (1), the worm (4) is engaged with the turbine (15), the turbine (15) is in revolute pair connection with the transmission shaft (16), the volute spring (17) has an outer end fixed on the turbine (15) and an inner end fixed on the transmission shaft (16), the transmission shaft (16) is in revolute pair connection with the stander (1), the main motor (5) is mounted on the stander (1), the main motor (5) is connected to one end of the main motor deceleration device (6), the other end of the main motor deceleration device (6) is connected to the small gear (7), the small gear (7) is engaged with the large gear (12), the large gear (12) is in revolute pair connection with the transmission shaft (16), the convex disc (8) is fixed on the large gear (12), the transitional disc (11) is fixed on the transmission shaft (16), the transitional disc (11) is disposed between the convex disc (8) and the concave disc (10), the slide rod (9) is in sliding pair connection with the transitional disc (11), the slide rod (9) has one end in higher pair connection with the convex disc (8) and the other end in higher pair connection with the concave disc (10), the concave disc (10) is in revolute pair connection with the transmission shaft (16), the concave disc (10) is fixed with the stander (1), the knocking arm (14) has one end fixed on the transmission shaft (16) and the other end connected to the knocking head (13).

2. The back knocking device according to claim 1, wherein the convex disc (8) has fixed thereon a plurality of bumps (19) having slopes.

3. The back knocking device according to claim 1, wherein the concave disc (10) has disposed thereon a plurality of grooves (18) having slopes.

## Patentansprüche

1. Rückschlagmechanismus mit einer Stehhilfe (1), einem Klopfkraftregelmotor (2), einer Klopfkraftregelverzögerungsvorrichtung (3), einer Schnecke (4), einem Hauptmotor (5), einer Hauptmotorverzögerungsvorrichtung (6), ein kleines Zahnrad (7), eine konvexe Scheibe (8), eine Gleitstange (9), eine konkave Scheibe (10), eine Übergangsscheibe (11), ein großes Zahnrad (12), einen Klopfkopf (13), einen Klopfarm (14), eine Turbine (15), eine Getriebewelle (16) und eine Spiralfeder (17), wobei am Ständer (1) der Klopfkraft-Stellmotor (2) angebracht ist, der Klopfkraftregelmotor (2) ist mit einem Ende der Klopfkraftregelverzögerungsvorrichtung (3) verbunden, das andere Ende der Klopfkraftregelverzögerungsvorrichtung (3) ist mit der Schnecke (4) verbunden, die Schnecke (4) steht paarweise drehend mit dem Ständer (1) in Verbindung, die Schnecke (4) steht mit der Turbine (15) in Eingriff, die Turbine (15) steht paarweise drehend mit der Getriebewelle (16) in Verbindung, die Spiralfeder (17) hat eine äußeres Ende, das an der Turbine (15) befestigt ist, und ein inneres Ende, das an der Getriebewelle (16) befestigt ist, die Getriebewelle (16) steht paarweise drehend mit dem Ständer (1) in Verbindung, der Hauptmotor (5) am Ständer (1) montiert ist, der Hauptmotor (5) ist mit einem Ende der Hauptmotorverzögerungsvorrichtung (6) verbunden, das andere Ende der Hauptmotorverzögerungsvorrichtung (6) ist mit dem kleinen Zahnrad (7) verbunden, das kleine Zahnrad (7) ist im Eingriff mit dem großen Zahnrad (12), das große Zahnrad (12) steht paarweise drehend mit der Getriebewelle (16) in Verbindung, die konvexe Scheibe (8) ist am großen Zahnrad (12) befestigt, die Übergangsscheibe (11) auf der Getriebewelle (16) befestigt ist, die Übergangsscheibe (11) ist zwischen der konvexen Scheibe (8) und der konkaven Scheibe (10) angeordnet, wobei die Gleitstange (9) in Gleitpaarverbindung mit der Übergangsscheibe (11) steht, die Gleitstange (9) hat ein Ende in höher paariger Verbindung mit der konvexen Scheibe (8) und das andere Ende in höher paariger Verbindung mit der konkaven Scheibe (10), die konkave Scheibe (10) steht paarweise drehend mit der Getriebewelle (16) in Verbindung, die konkave Scheibe (10) am Ständer (1) fixiert, der Klopfarm (14) hat ein Ende, das an der Getriebewelle (16) fixiert ist, und das andere Ende ist mit dem Klopfkopf (13) verbunden.

2. Rückschlagmechanismus nach Anspruch 1, wobei an der konvexen Scheibe (8) eine Vielzahl von Höckern (19) mit Schrägen befestigt sind.

3. Rückschlagmechanismus nach Anspruch 1, wobei auf der konkaven Scheibe (10) eine Vielzahl von Rillen (18) mit Schrägen angeordnet sind.

## Revendications

1. Appareil donnant des coups dans le dos, comprenant un bâti (1), un moteur régulateur de la force du coup (2), un dispositif de décélération régulateur de la force du coup (3), une vis sans fin (4), un moteur principal (5), un dispositif de décélération du moteur principal (6), un petit pignon (7), un disque convexe (8), une tige coulissante (9), un disque concave (10), un disque de transition (11), un grand pignon (12), une tête de frappe (13), un bras de frappe (14), une turbine (15), un arbre de transmission (16) et un ressort à volute (17) dans lequel le moteur régulateur de la force du coup (2) est monté sur le bâti (1), le moteur régulateur de la force du coup (2) est relié à une extrémité du dispositif de décélération régulateur de la force du coup (3), l'autre extrémité du dispositif de décélération régulateur de la force du coup (3) est reliée à la vis sans fin (4), la vis sans fin (4) est en liaison tournante avec le bâti (1), la vis sans fin (4) est en prise avec la turbine (15), la turbine (15) est en liaison tournante avec l'arbre de transmission (16), le ressort à volute (17) présente une extrémité externe fixée sur la turbine (15) et une extrémité interne fixée sur l'arbre de transmission (16), l'arbre de transmission (16) est en liaison tournante avec le bâti (1), le moteur principal (5) est monté sur le bâti (1), le moteur principal (5) est relié à une extrémité du dispositif de décélération du moteur principal (6), l'autre extrémité du dispositif de décélération du moteur principal (6) est reliée au petit pignon (7), le petit pignon (7) est en prise avec le grand pignon (12), le grand pignon (12) est en liaison tournante l'arbre de transmission (16), le disque convexe (8) est fixé sur le grand pignon (12), le disque de transition (11) est fixé sur l'arbre de transmission (16), le disque de transition (11) est disposé entre le disque convexe (8) et le disque concave (10), la tige coulissante (9) est en liaison coulissante avec le disque de transition (11), la tige coulissante (9) présente une extrémité en liaison supérieure avec le disque convexe (8) et l'autre extrémité en liaison supérieure avec le disque concave (10), le disque concave (10) est en liaison tournante avec l'arbre de transmission (16), le disque concave (10) est fixé avec le bâti (1), le bras de frappe (14) présente une extrémité fixée sur l'arbre de transmission (16) et l'autre extrémité reliée à la tête de frappe (13).

2. Appareil donnant des coups dans le dos selon la revendication 1, dans lequel le disque convexe (8), présente, fixées sur celui-ci une pluralité de bosses (19) présentant des pentes.

3. Appareil donnant des coups dans le dos selon la revendication 1, dans lequel le disque concave (10), présente, disposées sur celui-ci une pluralité de rainures (18) présentant des pentes.
